# EUROPEAN PATENT APPLICATION

(11) **EP 4 319 112 A1**
(43) Date of publication of application: **07.02.2024**
(21) Application number: 21938598.6
(22) Date of filing: 13.05.2021
(51) Int. Cl.: H04M 1/04

(54) **DEVICE FOR CLAMPING FLAT-PLATE-TYPE TARGET OBJECT**

(30) Priority: 30.04.2021 CN 202110482256
(71) Applicant: Shenzhen Lamiku Technology Co., Ltd, Shenzhen, Guangdong 518112 (CN)
(72) Inventor: DENG, Xiaoming, Shenzhen, Guangdong 518112 (CN)
(74) Representative: Canzler & Bergmeier Patentanwälte Partnerschaft mbB
(86) International application number: PCT/CN2021/093699
(87) International publication number: WO 2022/227125

(57) **Abstract**

A device (1) for clamping a flat-plate-type target object. The device (1) comprises: a housing (2), which is provided with a guide structure (211); a first clamping pair, which comprises a first clamping portion (31) and a second clamping portion (32), wherein the first clamping pair is at least partially accommodated in the housing (2), and the first clamping portion (31) and the second clamping portion (32) are guided by the guide structure (211); a transmission gear (4), which is in transmission connection with the first clamping portion (31) and the second clamping portion (32), so as to move the first clamping portion (31) and the second clamping portion (32) in opposite directions; and a first pre-load spring (51), wherein a first end of the pre-load spring (51) is held at the first clamping portion (31), and a second end of the pre-load spring (51) is held at the second clamping portion (32) or the housing (2), so as to apply a force, directed toward the second clamping portion (32), to the first clamping portion (31) used for holding the first end, and the pre-load spring (51) is arranged on two sides of a guide center of the guide structure (211) or coincides with the guide center of the guide structure (211). By means of the device (1), a target object can be conveniently installed in or removed from a clamping device.

## Description

### TECHNICAL FIELD

The present disclosure relates to a clamping device, and more particularly, to a device for clamping a flat-plate target object.

### BACKGROUND

Devices known for clamping flat-plate target objects (for example, but not limited to smartphones, tablets, touchpads, etc.) usually include: a bracket, and one or more clamping portions directly or indirectly fixed on the bracket, wherein the flat-plate target object is clamped on the bracket by the one or more clamping portions so as to liberate hands of a person when in use. However, existing devices of this kind have various defects. For example, when installing the target object into the clamping device or taking the target object out from the clamping device, the operation is inconvenient and requires manual cooperation.

In summary, the devices known for clamping flat-plate target objects have the difficulty of conveniently installing the target object into the clamping device or taking the target object out from the clamping device.

### SUMMARY

An object of the present invention is to provide a device for clamping a flat-plate target object, which can conveniently install the target object into or take the target object out from the clamping device.

According to the invention, the object is achieved by, that is, the proposed device for clamping a flat-plate target object, comprising: a housing, which is configured with a guide structure; a first clamping pair, which comprises a first clamping portion and a second clamping portion, and the first clamping pair is at least partially accommodated in the housing, wherein the first clamping portion and the second clamping portion are guided by the guide structure; a transmission gear, which is in transmission connection with the first clamping portion and the second clamping portion, enabling the first clamping portion and the second clamping portion to move in opposite directions; and a first pre-load spring, wherein a first end of the first pre-load spring is held at the first clamping portion, a second end of the first pre-load spring is held at the second clamping portion or the housing, so as to apply a force directed toward the second clamping portion to the first clamping portion for holding the first end, and the first pre-load spring is provided on both sides of a guide center of the guide structure or coincides with the guide center of the guide structure.

In some embodiments, the first pre-load spring is an extension spring. Lugs for holding the first pre-load spring are correspondingly provided on the respective sides of the first clamping portion and the second clamping portion, and the lugs are spaced a predetermined distance from the end of the corresponding clamping portion extending into the housing.

In some embodiments, the first pre-load spring is an extension spring. Lugs for holding the first pre-load spring are correspondingly provided on the respective sides of the first clamping portion and the second clamping portion, and the lugs are provided at the end of the clamping portion extending into the housing.

According to some embodiments of the invention, at least one of the first clamping portion and the second clamping portion has an elongated cutout, the first end of the first pre-load spring in the form of a compression spring is held at a bottom side of the elongated cutout facing the transmission gear, and the second end is held at the housing back to the transmission gear.

In some embodiments, the transmission gear is a cylindrical spur gear. The first clamping portion has a first rack, and the second clamping portion has a second rack, wherein the first rack and the second rack are extendedly arranged in parallel on both sides of the transmission gear.

According to some embodiments of the invention, the guide structure of the housing is a protrusion. The protrusion extends into a correspondingly disposed elongated slot of the clamping portion, wherein a width of the protrusion is equal to a width of the elongated slot. And/or, the guide structure of the housing is ribs disposed in pairs, and the clamping portion is arranged between the ribs, wherein a distance between inner sides of the ribs is equal to a width of the clamping portion.

In some embodiments, the housing is provided with a stopper so as to limit a range of motion of the clamping portion.

According to some embodiments of the invention, the clamping device further comprises a first locking unit to lock and unlock the movement of clamping portions of the first clamping pair relative to each other.

In some embodiments, the first locking unit comprises an operating handle, a driving member, and a slider having a tooth portion. The operating handle is configured to drive the slider to move in a direction perpendicular to a movement direction of clamping portions of the first clamping pair via the driving member, enabling the slider to be engaged with or separated from a tooth row provided at the first clamping portion or the second clamping portion.

In some embodiments, the device further comprises: a second clamping pair, which comprises a third clamping portion and a fourth clamping portion, wherein a movement direction of clamping portions of the second clamping pair is perpendicular to the movement direction of clamping portions of the first clamping pair; a transmission unit, which is in transmission connection with the third clamping portion and the fourth clamping portion, so as to enable the third clamping portion and the fourth clamping portion to move in opposite directions; a second pre-load spring, which is configured to apply a force directed toward one of the third clamping portion and the fourth clamping portion to the other of the third clamping portion and the fourth clamping portion. According to some embodiments of the invention, the third clamping portion and the fourth clamping portion are arranged in a stacked manner, wherein the housing comprises a second guide structure for the third clamping portion and the fourth clamping portion. The second guide structure is in a form of a protrusion and extends into elongated slots of the third clamping portion and the fourth clamping portion

In some embodiments, the third clamping portion and the fourth clamping portion comprise racks arranged on the same side, wherein the transmission unit comprises two stepped gears arranged in a staggered manner. Each stepped gear has large gears and small gears. The large gears mesh with each other. The small gears respectively mesh with the racks of the third clamping portion and the fourth clamping portion.

In some embodiments, a second locking unit is provided to lock and unlock the movement of clamping portions of the second clamping pair relative to each other.

In some embodiments, the second locking unit comprises a manipulation portion and a swing arm. The manipulation portion is configured to drive the swing arm to rotate, enabling a top of the swing arm to be engaged with or separated from one of the large gear of the stepped gears.

In some embodiments, the clamping device comprises a protective pad. The protective pad is arranged at clamping portions of the clamping pair or housing.

In some embodiments, the protective pad is provided with a rib on one side.

In some embodiments, the housing is provided with an interface. The interface is configured to be coupled with a coupling portion mounted on the bracket. The coupling portion is adjustable relative to the housing or the bracket.

In some embodiments, clamping portions of the first clamping pair and/or the second clamping pair comprise a sheet portion and a claw portion. The sheet portion is movably accommodated in the housing. The claw portion extends perpendicular to the sheet portion, and an end portion of the claw portion is configured to surround corner portions of the target object.

By means of the device proposed by the present invention, after the device itself being installed on a bracket in a simple and adjustable manner, in particular, a target object can be easily and conveniently placed at the device or taken out from the device. The target object can be reliably prevented from accidentally detaching from the device, thereby effectively protecting the device.

### BRIEF DESCRIPTION OF DRAWINGS

The present invention is further described below with reference to the drawings. Wherein,
FIG. 1 schematically illustrates a partial cutaway perspective view of a first embodiment of a device according to the present invention;
FIG.2 illustrates a rear perspective view of the device of FIG. 1;
FIG.3 illustrates a diagram of a clamping portion of the device of FIG. 1 in a retracted state;
FIG.4 illustrates a diagram of a clamping portion of the device of FIG. 1 in an extended state;
FIG.5 illustrates a sectional view of a device along line E-E of FIG.2, wherein an operating handle of FIG. 5 occupies a different position relative to FIG.2;
FIG.6 illustrates a diagram of a locking unit of a device in an unlocked state;
FIG.7 illustrates a diagram of a locking unit of a device in a locked state;
FIG.8a and FIG.8b respectively illustrate perspective views of a second embodiment of a device according to the present invention in different states;
FIG.9a and FIG.9b respectively illustrate perspective views of a third embodiment of a device according to the present invention in different states;
FIG. 10a and FIG. 10b respectively illustrate perspective views of a fourth embodiment of a device according to the present invention in different states;
FIG.11a and FIG. 11b respectively illustrate perspective views of a fifth embodiment of a device according to the present invention in different states;
FIG. 12 illustrates an exploded view of a sixth embodiment of a device according to the present invention;
FIG. 13a and FIG. 13b respectively illustrate a first clamping unit according to the device of FIG. 12 in different states;
FIG. 14 illustrates a diagram of a second clamping unit according to the device of FIG. 12;
FIG. 15 illustrates another diagram of a second clamping unit according to the device of FIG. 12;
FIG. 16 illustrates a sectional view of a device along line F-F of FIG. 15;
FIG. 17 illustrates another diagram of a second clamping unit according to the device of FIG. 12; and
FIG. 18 illustrates a sectional view of a device along line G-G of FIG. 17.

### DESCRIPTION OF EMBODIMENTS

Preferred embodiments of the present invention will be described in more detail below with reference to the drawings. Although preferred embodiments of the present invention are illustrated in the drawings, it should be understood that the present invention may be implemented in various forms and should not be limited by the embodiments set forth herein. Rather, these embodiments are provided so that the present invention will be more thorough and complete, and enable the scope of the present invention to be fully convey to those skilled in the art.

In the following description, for purposes of illustrating various embodiments of the invention, certain specific details are set forth to provide a thorough understanding of various embodiments of the invention. However, those skilled in the relevant art will recognize that embodiments may be practiced without one or more of these specific details. In other instances, well-known devices, structures, and techniques associated with the present application may not be illustrated or described in detail, so as to avoid unnecessarily obscuring the description of the embodiments.

Unless the context requires otherwise, throughout the specification and claims, the word "include" and variations thereof, such as "comprise" and "have", should be understood as an open and inclusive meaning, that is, it should be interpreted as "including, but not limited to".

References throughout the specification to "one embodiment" or "some embodiments" means that a particular feature, structure, or characteristic described in connection with an embodiment is included in at least one embodiment. Thus, appearances of "in one embodiment" or "in some embodiments" in various places throughout the specification are not necessarily all referring to the same embodiment. In addition, particular features, structures, or characteristics may be combined in any manner in one or more embodiments.

In addition, terms, such as first, second, and the like, used in the specification and claims are merely used to distinguish various objects for clarity of description, and do not define the size or other order of the described objects.

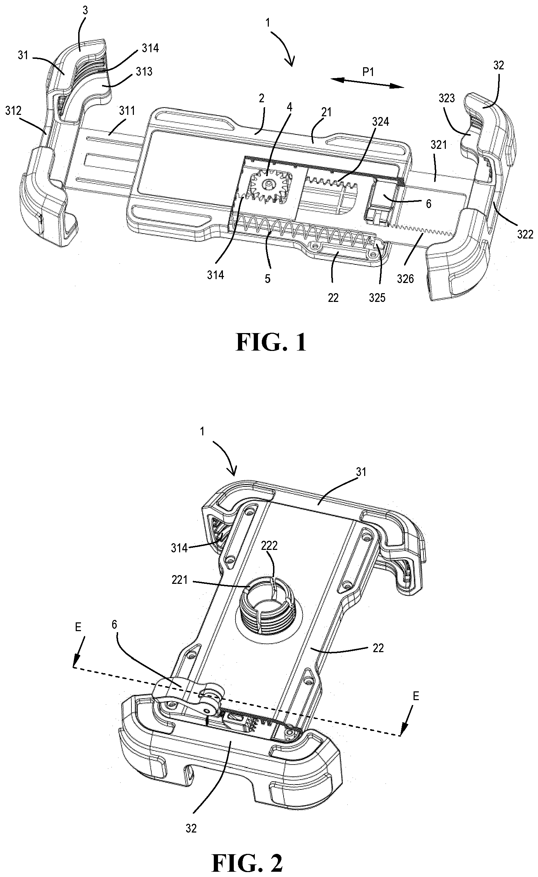

A first embodiment of a device 1 for clamping a flat-plate target object according to the present invention is schematically illustrated in FIG.1 to FIG.7. For a clearer illustration, the flat-plate target object is not shown in the drawings. The flat-plate target object may be an entity having a given extension in the length and width directions. In particular, the extension of the target object in the length and width directions is significantly greater than the extension in the height direction. The flat-plate target object is, for example, a mobile phone, a tablet, etc.

The device 1 has a housing 2. The housing 2 includes an upper housing 21 and a lower housing 22, which are connected to each other for example through spiral connection, snap connection, bonding, welding and so on. An accommodation space is defined between the connected upper housing 21 and the lower housing 22, to accommodate other components of the device described below. To this end, positioning and/or guide structures for the above-mentioned components are provided in the upper housing 21 and/or the lower housing 22, accordingly. In addition, the accommodation space has openings which are communicated with the outside and are arranged oppositely. The upper housing 21 and the lower housing 22 are thin-walled parts, and in order to enhance the strength, they may be provided with fillets.

The device 1 further has a first clamping pair, which includes a first clamping portion 31 and a second clamping portion 32, and is at least partially accommodated in the housing 2. As can be seen from the drawings, the first clamping portion 31 and the second clamping portion 32 have substantially the same structure and are constructed in a form of clamping claw. Preferably, the first clamping portion 31 and the second clamping portion 32 are arranged in a stacked manner, that is, arranged one above the other with reference to the thickness direction of the housing instead of being arranged in the same plane, thereby achieving an overall compact structure of the device. Specifically, the first clamping portion 31 and the second clamping portion 32 comprise: sheet portions 311, 321 and claw portions 312, 322. Sheet portions 311, 321 are accommodated in the housing 2 and are movable under the guidance of the guide structures of the housing. That is, sheet portions can extend out of the housing or retract into the housing, wherein one end of the sheet portions 311, 321 is always accommodated in the housing. Claw portions 312, 322 act directly on (more precisely, clamp) the target object. The claw portions 312, 322 are disposed at the other end of the sheet portions, which is opposite to the end of the sheet portions accommodated in the housing, wherein the claw portions extend perpendicular to the sheet portions. The sheet portions 311, 321 and the claw portions 312, 322 may be manufactured separately and then connected together, or they may be formed as one piece during manufacture.

Each of the clamping portions and the sheet portions 311, 321 of the clamping portions 31, 32 are provided with racks 314, 324 of a given length. The racks 314, 324 are engaged with the transmission gear 4 that is also arranged in the housing, to establish a transmission connection between the transmission gear 4 and the first clamping portion 31 and the second clamping portion 32, enabling the first clamping portion 31 and the second clamping portion 32 to move in opposite directions, as represented by arrow P1 in FIG.1. Thus, the transmission gear 4 can be rotatably mounted in the housing. The transmission gear 4 is shown as a cylindrical spur gear. The first rack 314 of the first clamping portion 31 and the second rack 324 of the second clamping portion 32 are extendedly arranged in parallel on both sides of the transmission gear 4. Both racks are straight extending racks.

In order to achieve controlled movement of the clamping portions, a guide structure 211 in the form of a protrusion is provided at the upper housing 21 of the housing 2. An elongated slot 317 is formed in the sheet portion 311 of the first clamping portion 31, and the protrusion extends into the elongated slot 317, wherein the width of the protrusion matches or is equal to the width of the elongated slot 317, so that the first clamping portion 31 is at least not significantly movable in a direction transverse to the extension direction of the elongated slot 317. Here, two pairs of protrusions and elongated slots 317 are shown. Although not shown in the drawings, the second clamping portion 32 may also be provided with a same elongated slot as the first clamping portion 31. A protrusion for the elongated slot may be provided at the housing, for example, be provided at the lower housing 22 of the housing.

To prevent accidental extension of the first clamping portion 31 and the second clamping portion 32 from the housing 2, a first pre-load spring 51 is provided, which is also provided in the housing. A first end of the first pre-load spring is held at one clamping portion of the clamping pair, and a second end of the first pre-load spring is held at the other clamping portion, so as to apply a force directed toward the second clamping portion to the first clamping portion for holding the first end. Thereby, when the device is not clamping a target object, the clamping pair is always held in a state of being retracted in the housing, which is advantageous for reducing the package size. During clamping of a target object, the first pre-load spring can also apply a clamping force to the clamped target object, so as to prevent the target object from falling out of the device, at least to a certain extent.

The first pre-load spring 51 is an extension spring, that is, a spring that bears axial tension. The extension spring may be a coil spring. When the extension spring is not subjected to a load, the turns of the extension spring are preferably close to each other.

Here shows a pair of first pre-load springs 51, which are at the outside of the guide structure, respectively, that is, at both sides of a guide center A of the guide structure. In this example, in the case that one protrusion for guiding the clamping portion is provided, the guiding center may correspond to a longitudinal centerline (not shown in the drawings) of the elongated slot of the guided clamping portion; in the case that a pair of protrusions for guiding the clamping portion are provided, the guiding center may correspond to a symmetric center of longitudinal centerlines of the pair of elongated slots of the guided clamping portion. By applying a balancing torque to the clamping portion by the pair of first pre-load springs 51, it avoids applying an external force to the guide structure due to the possible deflection of the clamping portion relative to the guide structure, which results in non-smooth guidance of the clamping portion. The pre-load springs arranged on both sides may be the same or different depending on their distance relative to a guide center of the guide structure. Wherein, in the case that the two pre-load springs are at the same distance from the guide center, they may be selected to be the same; otherwise, pre-load springs with different elastic coefficients should be selected. The farther the spring is from the guide center, the smaller the elastic coefficient is, and thereby achieving the balance of the torques exerted by the two springs on the clamping portions.

Lugs 315, 325 for holding the pre-load spring 51 are correspondingly provided on the respective sides of the first clamping portion 31 and the second clamping portion 32, and the lugs are spaced a predetermined distance from the end of the corresponding clamping portion extending into the housing 2. Both ends of the pre-load spring 51 are hooked on the lugs 315, 325 on each side of the clamping portions 31, 32, respectively. When the device is not clamping a target object, a distance between the lugs on the corresponding sides of the clamping portion of the first clamping pair is greater than an initial length of the first pre-load spring 51 when it is not installed, so as to apply an initial pulling force to the first clamping pair.

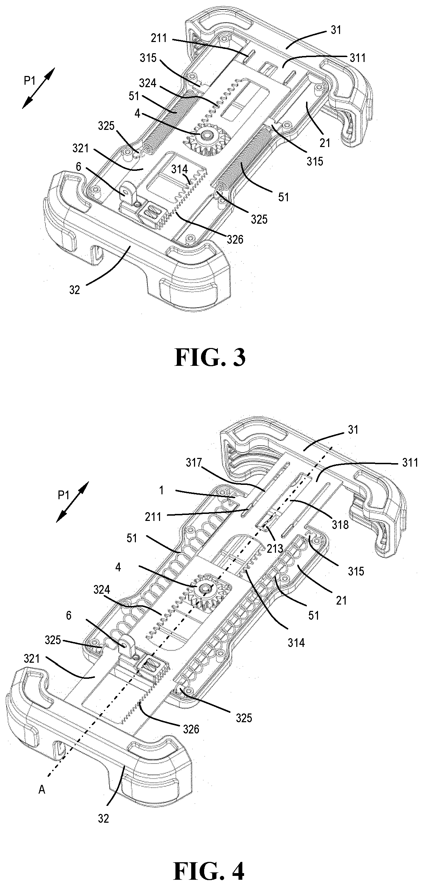

The housing 2 is further provided with a stopper 213 to define a range of motion of the clamping portions 31, 32, that is, a maximum length the clamping portion may extend from the housing. The stopper 213 may be integrally formed at the upper housing 21 or the lower housing 22 of the housing 2. Here shows a stopper 213 provided at the upper housing 21 in an I-shaped structure protruding from the bottom side of the upper housing. The first clamping portion has an elongated cutout 318 for receiving the stopper 213, which may extend parallel to the elongated slot 317. As can be seen in FIG. 4, in a state that the clamping portion of the clamping pair extends maximum from the housing 2, the bottom side of the cutout 318 of the first clamping portion 31 facing away from the claw portion 312 abuts against the stopper. In contrast, in FIG. 3, in a state that the clamping portion of the clamping pair is retracted into the housing 2, a free end of the second clamping portion 32 that is always accommodated in the housing 2 abuts against the stopper.

The device also has a first locking unit 6 to lock and unlock the movement of the clamping portions of the first clamping pair relative to each other. In particular, in the case that the device is clamping a target object and the target object is not expected to be accidentally disengaged, it is advantageous to lock the movement of the clamping portions. The first locking unit 6 is arranged on a side of the housing opposite to the stopper 213. The transmission gear 4 is located between the first locking unit 6 and the stopper 213, which can implement an overall compact arrangement of the device.

The shown first locking unit 6 has an operating handle 61, a driving member 62, and a slider 63 having a tooth portion 632. The operating handle 61 is configured to drive the slider 63 to move in a direction perpendicular to a movement direction of clamping portions of the first clamping pair via the driving member 62, enabling the slider 63 to be engaged with or separated from a tooth row 326 provided at the first clamping portion 31 or the second clamping portion 32.

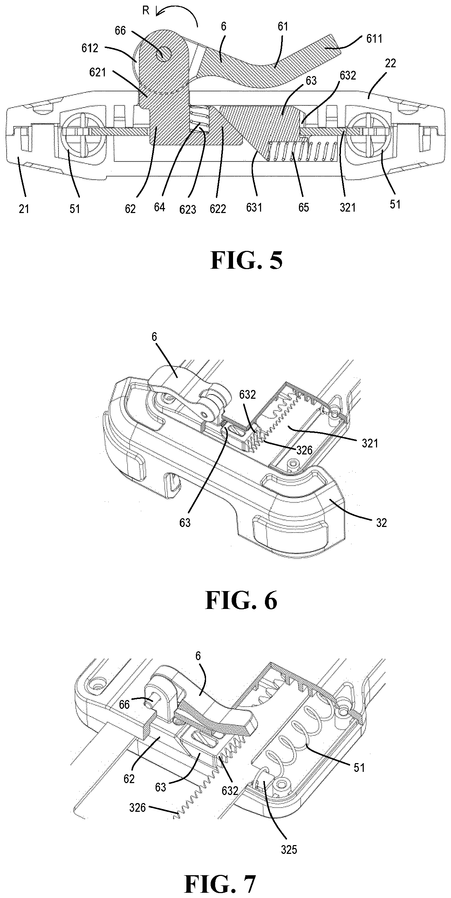

As seen particularly clearly from FIG. 5, the operating handle 61 of the first locking unit 6 is disposed on a side of the lower housing 22 facing away from the upper housing 21, and is rotatably connected to the driving member 62 via a pivot 66. The operating handle 61 has a handle 611 and a cam 612. The cam and the driving member have an aperture for receiving the pivot 66, and at least a portion of the circumferential surface of the cam has a different distance from the aperture for receiving the pivot 66 relative to other portions. The driving member 62 is L-shaped, a first section 621 portion of which partially penetrates from the lower housing and is connected to the operating handle 61 via a pivot 66, and the second section 622 is accommodated in the housing and abuts against the slider 63, wherein a recess 623 is provided in the second section 622. The first spring 64 in the form of a compression spring is accommodated in that recess. One end of the first spring abuts against the wall of the lower housing 22, and the other end abuts against the bottom side of the recess. The end of the second section 622 facing the slider 63 is inclined. The slider 63 has a tooth portion 632 and an inclined surface 631corresponding to the inclined end of the second section 622. The slider 632 is further provided with a second spring 65, which is also a compression spring, one end of which abuts against the slider 63, and the other end abuts against the upper housing 21. The thickness of the slider 63 may correspond to a distance between planes of the upper housing and the lower housing of the housing that facing each other. This at least limits movement of the slider in a thickness direction of the housing. In order to better guide the slider, a guide structure for limiting the movement of the slider in the movement direction of the clamping portion may also be provided at the housing.

The compression spring refers to a coil spring that bears the axial pressure, and there is a certain gap between its coils. When it is subjected to an external load, the spring contracts and deforms, stores deformation energy.

FIG.5 and FIG.7 illustrate the first locking unit 6 in a locked state. In this case, the circumferential surface portion of the cam 612 of the operating handle 61 at a maximum distance from the pivot 66 abuts against the lower housing 22. At this time, the driving member 62 is spaced apart from the upper housing 21. The first spring 64 is at a maximum compression state. The tooth portion 632 of the slider is engaged with the tooth row 326 of the second clamping portion 32, thereby locking the second clamping portion 32, so that the entire first clamping pair is not movable relative to the housing. When the operating handle 61 is rotated in the direction R shown in FIG.5, especially when it is rotated into the state shown in FIG. 6, the other circumferential surface portion of the cam 612 abuts against the lower housing. This other circumferential surface portion has a reduced distance relative to the pivot 66, so that the driving member 62 can move towards the direction of the upper housing 21 under the elastic force of the first spring 623, and the slider moves towards the driving piece 62 under the action of the elastic force of the second spring 65. Thus the tooth portion 632 of the slider is separated from the tooth row 326, thereby enabling the release of the movement of the clamping pair.

Therefore, the main difference of the two clamping portions of the first clamping pair is that one of the clamping portions has a tooth row 326 for the locking unit

The sheet portions 311, 321 of the clamping portions of the first clamping pair may be made of a hard materials. For example, the above-mentioned elongated slots 317, 327, cutout 318, racks 314, 324, tooth row 326, and the like are preferably formed by blanking a stainless steel sheet. The material of the steel sheet is, for example, 420 stainless steel, which has a hardness of 50 HRC. Other materials are also possible.

The claw portions 312, 322 of the clamping portions may be injection molded on the sheet portions 311, 321 from plastic, such as a composite material of polycarbonate PC and acrylonitrile-butadiene-styrene copolymer (ABS for short), or glass fiber reinforced polypropylene. The ends of the claw portions 312, 322 may surround the corners of the target obj ect to better protect the target obj ect. Therefore, even in a case that a device equipped with a target object falls off from a bracket or collides with other objects, at least the target object is prevented from being damaged to a certain extent.

The upper housing and the lower housing of the housing may be injection molded from plastic, such as a composite material of polycarbonate PC and acrylonitrile-butadiene-styrene copolymer (ABS for short), or glass fiber reinforced polypropylene. Preferably, the above-mentioned guide structure, reinforcing fillets, positioning portion for transmission gear, structures for connecting to the other portion of the housing, and the like are integrally formed on the upper housing and/or the lower housing.

The portion of the housing that is in direct contact with a target object and/or the claw portion may be provided with a protective pad. In a first embodiment, it shows protective pads 313, 323 disposed at the claw portions of the clamping portions of the clamping pair. The protective pads may be made of silica gel. The protective pads 313 may be provided with a rib 314 on the side contacting the target object, so as to achieve better protection and shock absorption effects. The protective pads may be individually shaped, preferably shaped in different colors, and then mounted on the claw portion to achieve cost-effective manufacturing. Protective pads 313 of different colors may provide users with more choices to meet personalized needs.

The housing 2 may be provided with an interface 221 at the lower housing 22. The interface is configured to be coupled with a coupling portion mounted on the bracket, and the coupling portion can be adjustable relative to the housing 2 or the bracket. An interface in the form of screw thread is shown. Other forms of interfaces are also possible, such as snap-on interfaces. Preferably, the interface is integrally formed on the lower housing 22. With regard to the coupling portion, an exemplary description will be given below.

Other embodiments of the present invention will be described hereinafter with reference to other drawings. In order to avoid redundancy, only the differences from the first embodiment of the device are described. For the undescribed parts, reference can be made to the foregoing content.

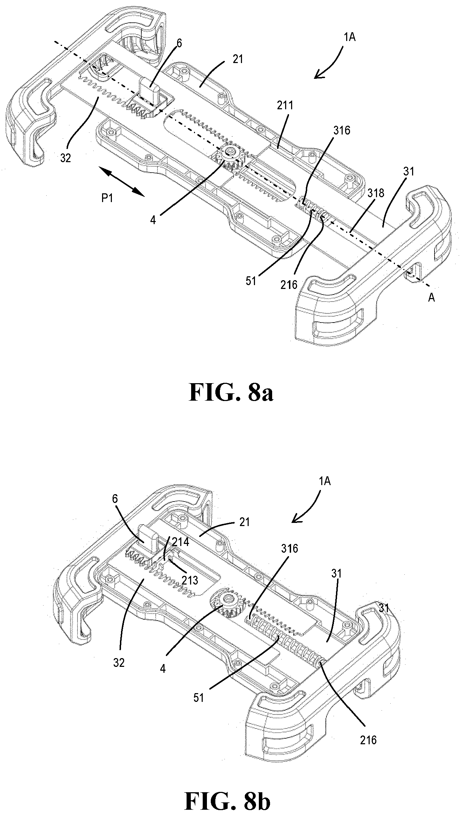

In the second embodiment of the device 1A according to the present invention shown in FIG.8a and FIG.8b, the first clamping portion 31 and the second clamping portion 32 of the first clamping pair are also arranged in a stacked manner. Here, the corresponding clamping portion is guided by the guide structure 211 that disposed on the upper housing 21 and in a form of ribs disposed in pairs. Here, a distance between the inner surfaces of the ribs facing each other is equal to the width of the first clamping portion 31 and the second clamping portion 32.

In this embodiment, only one first pre-load spring 51 is provided, which is arranged coincident with the guide center A of the guide structure, that is, is arranged centrally with respect to ribs disposed in pairs. Here, a first end of the first pre-load spring 51 is held at the bottom side of the cutout 318 disposed in the first clamping portion 31 facing the transmission gear 4, and a second end is held at the housing 2 facing away the transmission gear. Therefore, preferably, tabs 316, 216 are correspondingly disposed at the bottom side of the cutout 318 and the housing. The size of the tabs 316, 216 corresponds to the inner diameter of the threaded turn of the first pre-load spring 51, and the tabs are respectively inserted into the threaded turn of the first pre-load spring 51 at both side.

Relative to the first pre-load spring 51, the stopper 213 for the second clamping portion 32 is disposed at the upper housing 21 on the other side of the transmission gear 4. The stopper is formed at the guide structure 214 of the slider for the locking unit 6.

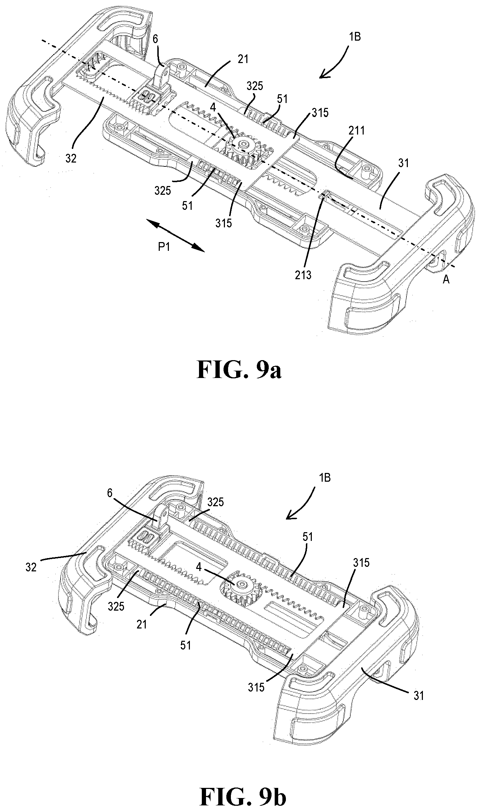

In the third embodiment of the device 1B according to the present invention shown in FIG.9a and FIG.9b, the first pre-load spring 51 is also arranged on both sides of the stacked first clamping portion 31 and the second clamping portion 32. However, unlike the first embodiment, the first pre-load spring 51 here is a compression spring. Lugs 315, 325 for holding the first pre-load spring 51 are correspondingly provided on the respective sides of the first clamping portion 31 and the second clamping portion 32, and the lugs are provided at the end, in particular at the top end, of the clamping portion extending into the housing 2

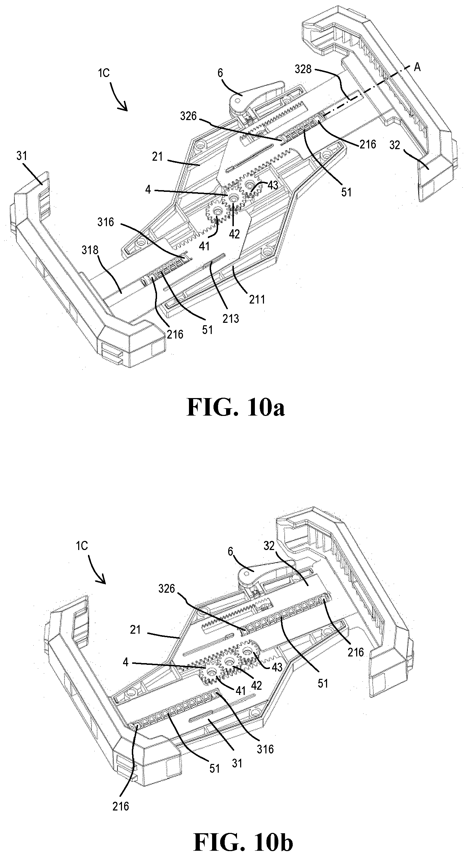

In the fourth embodiment of the device 1C shown in FIG.10a and FIG. 10b, the first clamping portion 31 and the second clamping portion 32 of the first clamping pair are arranged in the same plane, wherein each clamping portion is provided with a first pre-load spring 51.

In this embodiment, the guide structure for the corresponding clamping portion formed at the upper housing 21 is in the form of a rib, and the first pre-load spring 51 is arranged at the center of the rib. Thus, the first end of the first pre-load spring 51 for the first clamping portion 31 is held at the bottom side of the cutout 318 disposed in the first clamping portion 31 facing the transmission gear 4, and the second end is held at the housing 2 facing away from the transmission gear. Wherein, tabs 316, 216 are correspondingly disposed at the bottom side of the cutout 318 and the housing. The size of the tabs 316, 216 corresponds to the inner diameter of the threaded turn of the first pre-load spring 51, and the tabs are respectively inserted into the threaded turn of the first pre-load spring 51 at both side. The first end of the first pre-load spring 51 for the second clamping portion 32 is held at the bottom side of the cutout 328 disposed in the second clamping portion 32 facing the transmission gear 4, and the second end is held at the housing 2 facing away from the transmission gear. Wherein, tabs 316, 216 are correspondingly disposed at the bottom side of the cutout 328 and the housing. The size of the tabs 316, 216 corresponds to the inner diameter of the threaded turn of the first pre-load spring 51, and the tabs are respectively inserted into the threaded turn of the first pre-load spring 51 at both side.

Here, the stopper 213 for the clamping portion is in a form of a protrusion, which engages into the elongated slot provided in the corresponding clamping portion.

In addition, the transmission gear 4 has three sub-gears 41, 42, 43 that mesh with each other and are arranged staggered from each other. The operating handle 61 of the first locking unit 6 is arranged on the side of the housing. Unlike the first embodiment of the device, the operating handle 61 is directly connected to the slider, and therefore the driving member is omitted, wherein the slider extends partially from the side of the housing.

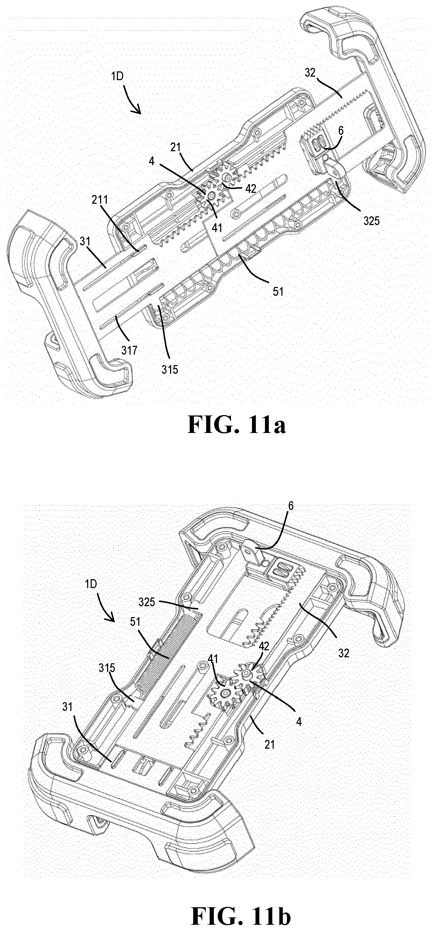

In the fifth embodiment of the device 1D according to the present invention shown in FIG.11a and FIG.11b, racks of the first clamping portion 31 and the second clamping portion 32 of the first clamping pair arranged in a stacked manner are arranged on the same side. The transmission gear 4 has two sub-gears 41, 42 arranged staggered from each other, and the two sub-gears 41, 42 are respectively meshed with the racks of the corresponding clamping portions. The two sub-gears 41, 42 are identical. A first pre-load spring 51 for holding the first clamping portion 31 and the second clamping portion 32 together is arranged on the other side of the clamping pair opposite the transmission gear 4. The first pre-load spring 51 may be an extension spring, and both ends of the first pre-load spring 51 are respectively hooked on the lugs 315, 325 provided on the corresponding clamping portions.

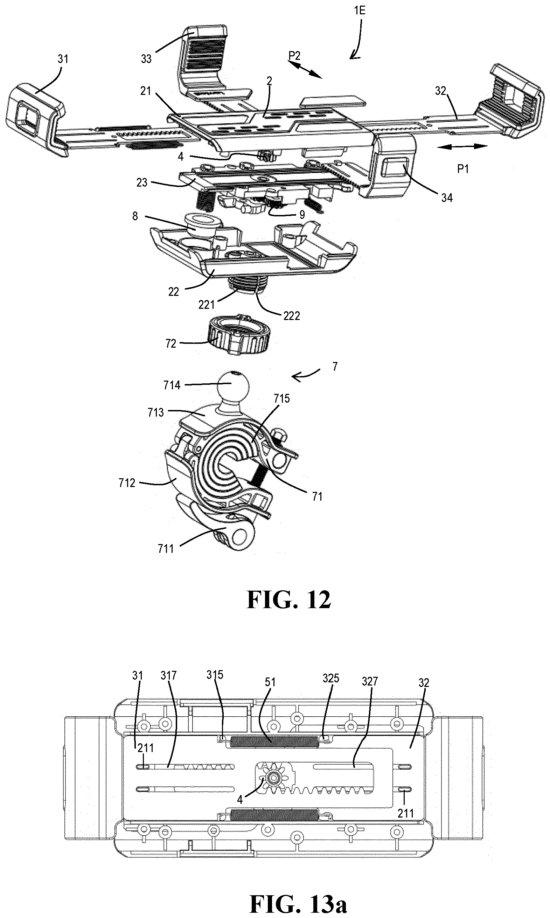

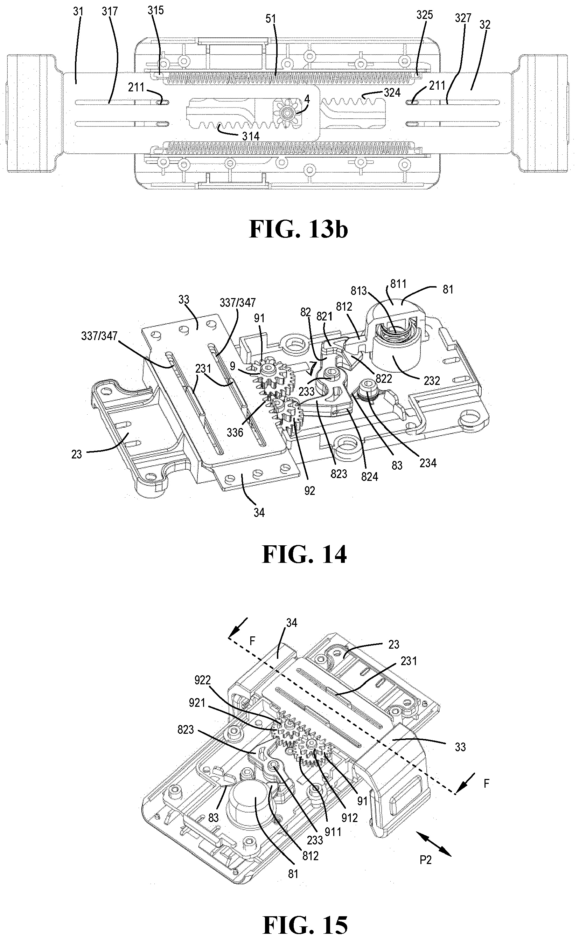

A sixth embodiment of the device 1E according to the present invention is shown in FIG.12 to FIG.18. In this embodiment, the arrangement of the first claw pair, the first pre-load spring, the transmission gear, and the guide structure of the device 1E is provided in a manner similar to the device 1 of the first embodiment, as seen particularly clearly from FIG.13a and FIG.13b. Details are not described herein again, and reference may be made to the foregoing content.

The device 1E further has a second clamping pair, which includes a third clamping portion 33 and a fourth clamping portion 34, wherein a movement direction P2 of clamping portions of the second clamping pair is perpendicular to the movement direction P1 of clamping portions of the first clamping pair. The second clamping pair and the first clamping pair are arranged in a stacked manner. In the example shown, the second clamping pair is arranged below the first clamping pair. The housing 2 also has a spacer board 23, which is arranged between the upper housing 21 and the lower housing 22 of the housing. Wherein the first clamping pair is arranged in an accommodation space defined by the upper housing 21 and the spacer board 23, and the second clamping pair is arranged in an accommodation space defined by the spacer board 23 and the lower housing 22.

The second clamping pair is illustrated below in conjunction with FIG.14 to FIG.18.

The third clamping portion 33 and the fourth clamping portion 34 of the second clamping pair are arranged in a stacked manner, and they may have sheet portions and claw portions like the first clamping portion and the second clamping portion. The housing, more specifically the spacer board 23, has a second guide structure 231 for guiding the third clamping portion 33 and the fourth clamping portion 34. In this example, the second guide structure 231 is in the form of a protrusion and extends into elongated slots 337, 347 of the third clamping portion 33 and the fourth clamping portion 34.

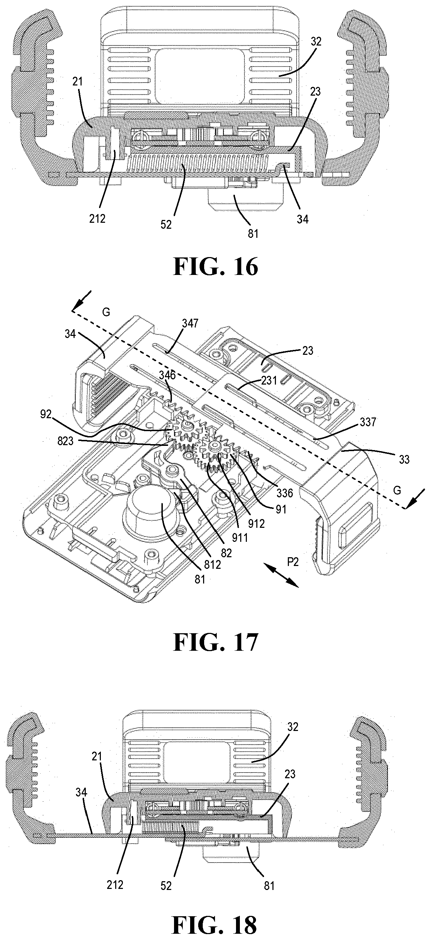

A second pre-load spring 52 is provided for the third clamping portion 33 and the fourth clamping portion 34, which is configured to apply a force directed toward one of the third clamping portion 33 and the fourth clamping portion 34 to the other of the third clamping portion 33 and the fourth clamping portion 34. The second pre-load spring 52 may be arranged between the protrusions of the spacer board 23 forming the second guide structure 231, in particular arranged centrally with respect to the second guide structure 231. Wherein the second pre-load spring 52 is an extension spring, the first end of which is hooked at the bulge 212 formed at the upper housing 23 and passing through the spacer board 23, and the second end is hooked at one clamping portion 34. Wherein a first state of the second pre-load spring 52 is shown in FIG.16, that is, an extension relative to the original state. A second state of the second pre-load spring 52 when the third clamping portion 33 and the fourth clamping portion 34 extend out of the housing 2 is shown in FIG. 18. In this case, it may be seen that the second pre-load spring 52 is in its original length. With regard to the second pre-load spring 52, further description will be given below.

The third clamping portion 33 and the fourth clamping portion 34 are in transmission connection via the transmission unit 9, enabling the third clamping portion 33 and the fourth clamping portion 34 to move in opposite directions. The third clamping portion 33 and the fourth clamping portion 34 have racks 336, 346 arranged on the same side, and they are staggered with respect to the movement direction P1, as may be seen from FIG. 17. The transmission unit 9 includes two stepped gears 91, 92 arranged in a staggered manner, that is, the stepped gears 91, 92 are arranged staggered with respect to the movement directions P1 and P2. The stepped gears 91, 92 are identical components, that is, are exactly the same in terms of geometric parameters and profiles. The stepped gears 91, 92 have large gears 911, 921 and small gears 912, 922. The large gears 911, 921 mesh with each other, and the small gears 912, 922 mesh with the racks 336, 346 of the third clamping portion 33 and the fourth clamping portion 34, respectively. Therefore, when one of the third clamping portion 33 and the fourth clamping portion 34 moves, its movement may drive the large gear below through the small gear meshed with it, and then drive, via that large gear, the adjacent stepped gear and the other clamping portion to move in opposite directions.

A second locking unit 8 is provided for the second clamping pair, to lock and unlock the movement of the clamping portion of the second clamping pair relative to each other. The second locking unit 8 has a manipulation portion 81 and a swing arm 82, and the swing arm 82 is rotatably mounted on the pivot 233. The top 823 of the swing arm 82 can be engaged in the teeth of a large gear of a stepped gear. The manipulation portion 81 is configured to drive the swing arm 82 to rotate, enabling the top 823 of the swing arm 82 to be engaged with or separated from one of the large gear of the stepped gears. The second locking unit 8 also has a torsion spring 83, the spiral portion of which is held at the column 234 formed on the spacer board 23. A free arm abuts against the spacer board 23, and the other free arm abuts against the swing arm 82, so that the swing arm can rotate around the pivot 233.

The manipulation portion 81 is configured in the form of a button, which has a barrel 811 extending from the lower housing 22 of the housing. The barrel 811 is held at a matching barrel 232 formed on the spacer board 23, and may move up and down along the axial direction of the barrel relative to the matching barrel 232. A third spring 813 is arranged in the barrel 811. A protruding portion 812 is provided on the periphery of the barrel 811, and an end surface of the protruding portion abuts against an end 822 of the swing arm 82. Wherein, the end surface of the protruding portion and the end 822 of the swing arm 82 extend obliquely, that is, an inclined surface. By pressing the barrel 811 of the manipulation portion 81, the barrel can be converted from a first position to a second position along the axial direction thereof. For example, when the barrel 811 is pressed such that the protruding portion 812 moves in a direction toward to the end 822, the protruding portion 812 applies a force to the swing arm 82 to overcome the force of the torsion spring 83 acting on the swing arm 82, enabling the top 823 of the swing arm 82 to be disengaged from the tooth portion of the large gear, thereby releasing the movement of the stepped gears of the transmission unit 9 relative to each other. Conversely, when the barrel 811 of the manipulation portion 81 continues to be pressed, the barrel drives the protruding portion 812 to move in a direction away from the end 822 under the force of the third spring 813, so that the top 823 of the swing arm 82 is engaged in the tooth portion of the large gear under the action of the torsion spring 83, thereby locking the movement of the stepped gears of the transmission unit 9 relative to each other.

When the third clamping portion 33 and the fourth clamping portion 34 of the second clamping pair are retracted into the housing, the second pre-load spring 52 is elongated relative to its original length. In this case, the second pre-load spring 52 applies a force to the fourth clamping portion 34 directed toward the outside of the housing. Wherein the top 823 of the swing arm 82 of the second lock unit 8 is engaged in the tooth portion of the large gear to prevent the third clamping portion 33 and the fourth clamping portion 34 from extending out of the housing 4 under the elastic force of the second pre-load spring 52. If operating the manipulation portion 81, the top 823 of the swing arm 82 is disengaged from the tooth portion of the large gear, and the elongated second pre-load spring 52 will reset to its original length, thereby driving the clamping portion connected thereto to extend out of the housing, and simultaneously driving, via the transmission unit 9, the other clamping portion to extend out of the housing in the opposite direction. This achieves automatic extension of the clamping portions of the second clamping pair, thereby facilitating removal of the clamped target object.

Alternatively, in examples not shown, the second pre-load spring may also be a compression spring, referring to FIG. 16, a first end of which abuts against the right side of the spacer board 23, and a second end abuts against the bulge formed on the fourth clamping portion 34. When the clamping portions of the second clamping portion is retracted into the housing, the second pre-load spring is compressed. While, when the second locking unit 8 is unlocked, the second pre-load spring returns to its original length, thereby pushing the fourth clamping portion 34 to extend out of the housing, and simultaneously driving, via the transmission unit 9, the third clamping portion 33 to extend out of the housing.

The housing 2 is also provided with an interface 221. The interface is configured to be coupled with a coupling portion 7 mounted on the bracket. The position of the coupling portion 7 is adjustable relative to the housing 2 or the bracket, such as by rotation. The interface 221 has at least one groove 222.

The illustrated interface 221 is in a form of a threaded interface, which is used for receiving the coupling ball-head 714 of the coupling portion 7, thereby forming a ball connection. Therefore, the inner surface of the interface 221 is spherical. In order to lock the position of the coupling ball-head 714 relative to the interface 221, an adjusting nut 72 is provided, which has an internal thread that cooperates with the external thread of the interface, wherein the internal thread and external thread extend obliquely with respect to the central axis of the adjustment nut and the interface. After the adjusting nut 72 is screwed on the interface 221, by adjusting the position of the nut 72 relative to the interface 221, the size of the spherical space of the interface for accommodating the coupling ball-head 714 can be adjusted, thereby locking the position of the coupling ball-head 714 or releasing the movement of the coupling ball-head 714. The bottom of the adjusting nut 72 is empty, such that the coupling ball-head 714 may enter the interface 221 passing through the adjusting nut 72.

The coupling ball-head 714 is arranged on the snap ring 71 of the coupling portion 7, in particular, on arc-shaped cards 712, 713 that form the snap ring and are relatively rotatable connected. The free ends of the arc-shaped cards 712, 713 are connected together through a locking rod 711. The locking rod 711 may be in the form of a currently known quick release rod, one end of which is provided with a threaded portion, and the other end is a handle having a cam structure. Gaskets 715 are arranged in the snap ring 71. The number of the gaskets may be set according to the size of the bracket. A 4-layer gasket is shown as an example.

Certainly, other forms of the interface 221 and the coupling portion 7 may also be considered, as long as the position adjustment relative to the bracket can be achieved. For example, the interface and the coupling portion may be in the form of a snap connection. In this case, the coupling portion may be designed as an elastic band, which is provided with a male buckle, and the interface is in the form of a female buckle.

An exemplary application of a device according to the present invention is used for clamping a mobile phone or a tablet. After the device is mounted at the handle of a bicycle or a motorcycle via its coupling portion, the position of the housing of the device provided with clamping portions can be adjusted relative to the handle, so that the clamped mobile phone or tablet occupies the correct position relative to the user's observation field of view. This may be achieved by rotating the housing relative to the coupling portion or rotating the coupling portion relative to the handle. After adjustment is completed, the coupling portion may be locked.

It should be noted that, the features or combinations of features of the device according to the present invention described above, and the features and combinations of features mentioned in the drawings and/or only shown in the drawings are not only can be used in the corresponding given combinations, but can also be used in other combinations or alone without departing from the scope of the present invention.

The present invention has been illustrated by the above-described embodiments, but it should be understood that, the above-described embodiments are only for purposes of description and illustration, and are not intended to limit the present invention to the scope of the illustrated embodiments. It should be understood by those skilled in the art that more variations and modifications can be made according to the teachings of the present invention, which fall within the protection scope of the present invention.

## Claims

1. A device (1, 1A, 1B, 1C, 1D, 1E) for clamping a flat-plate target object, comprising:
a housing (2) configured with a guide structure (211);
a first clamping pair, comprising a first clamping portion (31) and a second clamping portion (32), the first clamping pair being at least partially accommodated in the housing (2), wherein the first clamping portion (31) and the second clamping portion (32) are guided by the guide structure (211);
a transmission gear (4), configured to be in transmission connection with the first clamping portion (31) and the second clamping portion (32), enabling the first clamping portion (31) and the second clamping portion (32) to move in opposite directions; and
a first pre-load spring (51), wherein a first end of the first pre-load spring is held at the first clamping portion (31), a second end of the first pre-load spring is held at the second clamping portion or the housing (2), so as to apply a force directed toward the second clamping portion to the first clamping portion for holding the first end, and the first pre-load spring (51) is provided on both sides of a guide center (A) of the guide structure or coincides with the guide center (A) of the guide structure.

2. The device (1, 1A, 1B, 1C, 1D, 1E) according to claim 1, wherein the first pre-load spring (51) is an extension spring, lugs (315, 325) for holding the first pre-load spring (51) are correspondingly provided on the respective sides of the first clamping portion (31) and the second clamping portion (32), and the lugs are spaced a predetermined distance from the end of the corresponding clamping portion extending into the housing (2).

3. The device (1, 1A, 1B, 1C, 1D, 1E) according to claim 1, wherein the first pre-load spring (51) is an extension spring, lugs (315, 325) for holding the first pre-load spring (51) are correspondingly provided on the respective sides of the first clamping portion (31) and the second clamping portion (32), and the lugs are provided at the end of the clamping portion extending into the housing (2).

4. The device (1, 1A, 1B, 1C, 1D, 1E) according to claim 1, wherein at least one of the first clamping portion (31) and the second clamping portion (32) has an elongated cutout (318), the first end of the first pre-load spring (51) in the form of a compression spring is held at a bottom side of the elongated cutout (318) facing the transmission gear (4), and the second end is held at the housing (2) facing away the transmission gear.

5. The device (1, 1A, 1B, 1C, 1D, 1E) according to claim 1, wherein the transmission gear (4) is a cylindrical spur gear, the first clamping portion (31) has a first rack (314), the second clamping portion (32) has a second rack (324), wherein the first rack (314) and the second rack (324) are extendedly arranged in parallel on both sides of the transmission gear (4).

6. The device (1, 1A, 1B, 1C, 1D, 1E) according to any one of claims 1 to 5, wherein the guide structure (211) of the housing (2) is a protrusion, the protrusion extends into a correspondingly disposed elongated slot (317) of the clamping portion, and wherein a width of the protrusion is equal to a width of the elongated slot (317), and/or the guide structure (211) of the housing (2) is ribs disposed in pairs, the clamping portion is arranged between the ribs, and wherein a distance between inner sides of the ribs is equal to a width of the clamping portion.

7. The device (1, 1A, 1B, 1C, 1D, 1E) according to claim 6, wherein the housing (2) is provided with a stopper (213), so as to limit a range of motion of the clamping portion.

8. The device (1, 1A, 1B, 1C, 1D, 1E) according to claim 7, wherein the clamping device further comprises a first locking unit (6) to lock and unlock the movement of clamping portions of the first clamping pair relative to each other.

9. The device (1, 1A, 1B, 1C, 1D, 1E) according to claim 8, wherein the first locking unit (6) comprises an operating handle (61), a driving member (62), and a slider (63) having a tooth portion (632), wherein the operating handle (61) is configured to drive the slider (63) to move in a direction perpendicular to a movement direction of clamping portions of the first clamping pair via the driving member (62), enabling the slider (63) to be engaged with or separated from a tooth row (326) provided at the first clamping portion (31) or the second clamping portion (32).

10. The device (1, 1A, 1B, 1C, 1D, 1E) according to any one of claims 1 to 9, wherein the device further comprises:
a second clamping pair, comprising a third clamping portion (33) and a fourth clamping portion (34), wherein a movement direction of clamping portions of the second clamping pair is perpendicular to the movement direction of clamping portions of the first clamping pair;
a transmission unit (9), configured to be in transmission connection with the third clamping portion (33) and the fourth clamping portion (34), so as to enable the third clamping portion (33) and the fourth clamping portion (34) to move in opposite directions; and
a second pre-load spring (52), configured to apply a force directed toward one of the third clamping portion (33) and the fourth clamping portion (34) to the other of the third clamping portion (33) and the fourth clamping portion (34).

11. The device (1, 1A, 1B, 1C, 1D, 1E) according to claim 10, wherein the third clamping portion (33) and the fourth clamping portion (34) are arranged in a stacked manner, wherein the housing comprises a second guide structure (231) for the third clamping portion (33) and the fourth clamping portion (34), and the second guide structure is in a form of a protrusion and extends into elongated slots (337, 347) of the third clamping portion (33) and the fourth clamping portion (34).

12. The device (1, 1A, 1B, 1C, 1D, 1E) according to claim 11, wherein the third clamping portion (33) and the fourth clamping portion (34) comprise racks (332, 346) arranged on the same side, wherein the transmission unit (9) comprises two stepped gears (91, 92) arranged in a staggered manner, each stepped gear has large gears and small gears, the large gears mesh with each other, and the small gears respectively mesh with the racks of the third clamping portion (33) and the fourth clamping portion (34).

13. The device (1, 1A, 1B, 1C, 1D, 1E) according to claim 12, wherein a second locking unit (8) is provided to lock and unlock the movement of clamping portions of the second clamping pair relative to each other.

14. The device (1, 1A, 1B, 1C, 1D, 1E) according to claim 13, wherein the second locking unit (8) comprises a manipulation portion (81) and a swing arm (82), wherein the manipulation portion (81) is configured to drive the swing arm (82) to rotate, enabling a top (823) of the swing arm (82) to be engaged with or separated from one of the large gear of the stepped gears.

15. The device (1, 1A, 1B, 1C, 1D, 1E) according to any one of claims 1 to 14, wherein the clamping device comprises a protective pad (313), and the protective pad is arranged at clamping portions of the clamping pair or housing.

16. The device (1, 1A, 1B, 1C, 1D, 1E) according to claim 15, wherein the protective pad (313) is provided with a rib (314) on one side.

17. The clamping device (1, 1A, 1B, 1C, 1D, 1E) according to claim 15, wherein the housing (2) is provided with an interface (221), and the interface is configured to be coupled with a coupling portion (7) mounted on the bracket, wherein the coupling portion (7) is adjustable relative to the housing (2) or the bracket.

18. The clamping device (1, 1A, 1B, 1C, 1D, 1E) according to claim 15, wherein clamping portions of the first clamping pair and/or the second clamping pair comprise a sheet portion and a claw portion, wherein the sheet portion is movably accommodated in the housing, the claw portion extends perpendicular to the sheet portion, and an end portion of the claw portion is configured to surround corner portions of the target object.
